# FASCICULE DE BREVET EUROPEEN

(11) **EP 2 743 216 B1**
(45) Date de publication et mention de la délivrance du brevet: **03.08.2016**
(21) Numéro de dépôt: 14157924.3
(22) Date de dépôt: 22.05.2012
(51) Int. Cl.: B65G 47/51

(54) **DISPOSITIF D'ACCUMULATION DE PRODUITS**
VORRICHTUNG ZUR AKKUMULATION VON PRODUKTEN
DEVICE FOR THE ACCUMULATION OF PRODUCTS

(30) Priorité: 24.05.2011 FR 1154500
(43) Date de publication de la demande: 18.06.2014
(62) Demande divisionnaire de: 12731034.0
(73) Titulaire: Deflandre, Hervé, 59632 La Chapelle d'Armentières Cedex (FR)
(72) Inventeur: Deflandre, Hervé, 59632 La Chapelle d'Armentières Cedex (FR)
(74) Mandataire: Balesta, Pierre

(56) Documents cités:
- FR-A1- 2 524 436
- JP-A- 59 053 315

## Description

La présente invention concerne un dispositif d'accumulation de produits et une installation comprenant un tel dispositif.

Un tel dispositif d'accumulation est décrit dans le document JP 59053315 A. Un dispositif d'accumulation est par exemple décrit également dans le document FR 2 524 436 et comprend un premier tapis convoyeur linéaire configuré pour transférer des articles dans un premier sens, un second tapis convoyeur linéaire, parallèle au premier tapis convoyeur, configuré pour transférer les articles dans un second sens inversé par rapport au premier et, un troisième tapis convoyeur formant un demi-cercle, configuré pour transférer les articles du premier tapis convoyeur vers le second tapis convoyeur. Le dispositif d'accumulation comprend également des moyens de translation configurés pour translater le troisième tapis convoyeur par rapport au premier et au second tapis convoyeur, dans le premier sens ou inversement dans le second sens. Ce troisième tapis convoyeur est décalé vers le haut par rapport aux premier et second tapis convoyeurs. En outre, deux rampes sont agencées au niveau des deux extrémités du troisième tapis convoyeur et assujetties à celles-ci en sorte que la translation du troisième tapis convoyeur permet concomitamment le déplacement des rampes qui glissent vis-à-vis du premier et du second tapis convoyeurs pour moduler la longueur du dispositif d'accumulation. Ces rampes permettent d'une part la montée des produits du premier convoyeur vers le troisième tapis convoyeur et inversement la descente des produits du troisième tapis convoyeur vers le second tapis convoyeur. Ces rampes sont constituées d'une languette sur laquelle glissent les produits durant leur montée ou leur descente, sous l'effet de la poussée exercée par les produits disposés en amont et se déplaçant dans le sens d'acheminement sur les tapis convoyeurs. On comprend que les rampes glissent sur le premier et le second tapis convoyeurs durant leur déplacement, concomitamment au troisième tapis convoyeur, ce qui peut engendrer une dégradation prématurée desdits premier et second tapis convoyeurs. En outre, la conception du dispositif d'accumulation selon ce document FR 2 524 436 est tout particulièrement adaptée pour des produits dont la masse est faible tels que des biscuits. On comprend que si la masse des produits est beaucoup plus importante telle que par exemple pour des bouteilles, une telle conception de rampes peut occasionner des difficultés de transfert des produits du premier tapis convoyeur vers le troisième tapis convoyeur et inversement du troisième tapis convoyeur vers le second tapis convoyeur, puisque ledit transfert s'effectue par glissement sur les languettes et nécessite donc une poussée plus importante des produits disposés en amont, lesquels peuvent éventuellement glisser sur le premier tapis convoyeur, voire basculer. De même, lors du passage des produits du premier tapis convoyeur sur la languette de la rampe, on comprend que les produits peuvent avoir des difficultés à franchir le bord de ladite languette, ce qui peut éventuellement provoquer le basculement des produits.

Le document JP 59 053315 décrit un dispositif d'accumulation, qui comprend un système de rampe associé à un convoyeur semi-circulaire à rouleaux du type gravitaire présentant une pente descendante dont l'entrée est surélevée par rapport à la sortie. Dans ce dispositif, les objets convoyés sont amenés en hauteur grâce au système de rampe depuis un premier tapis puis descendent par gravité vers le deuxième tapis en parcourant le convoyeur semi-circulaire à rouleaux depuis son entrée vers sa sortie située sous la première extrémité. Un tel dispositif ne permet pas de convoyer des séries de produits devant rester bien alignés les uns par rapport aux autres.

L'objet de l'invention est de mettre en oeuvre un dispositif d'accumulation permettant de pallier les inconvénients précités. Pour cela, l'invention porte sur un dispositif d'accumulation selon la revendication 1.

On comprend que selon cette conception du dispositif d'accumulation objet de l'invention, les pentes sont réalisées directement sur le premier tapis convoyeur et le second tapis convoyeur, ce qui facilite l'acheminement des articles puisque le transfert s'effectue directement entre les tapis qui sont en mouvement et supprime le passage par une étape intermédiaire sur une rampe selon laquelle lesdits produits sont transférés par glissement sous l'effet de la poussée des articles disposés en amont. Cette conception selon l'invention est donc aussi bien adaptée pour les produits de masse faible que de masse importante. En outre, le transfert étant réalisé directement entre les tapis convoyeurs, cela limite les risques de basculement des produits.

On comprend également que tant l'entrée que la sortie du troisième tapis convoyeur sont surélevées par rapport aux premier et second tapis convoyeurs.

Avantageusement, les premier et second tapis convoyeurs sont linéaires.

Avantageusement, le troisième tapis convoyeur forme un demi-cercle.

Selon le dispositif d'accumulation objet de l'invention, le premier tapis convoyeur comprend une première bande transporteuse qui est munie d'une première face interne, le second tapis convoyeur comprend une seconde bande transporteuse qui est munie d'une seconde face interne. En outre, les premier et second systèmes de rampes comprennent respectivement un premier et second rouleaux qui sont montés à pivotement selon des axes transversaux aux première et seconde bandes transporteuses et de manière attenante aux première et seconde extrémités du troisième tapis convoyeur, ces premier et second rouleaux prenant appui respectivement sur les première et seconde faces internes pour constituer lesdites première et seconde pentes. L'utilisation de tels rouleaux supprime les frottements sur la face interne des bandes transporteuses, lors des déplacements des première et second systèmes de rampes concomitamment au troisième tapis convoyeur.

On comprend donc que les première et seconde extrémités du troisième tapis convoyeur sont surélevées par rapport aux premier et second tapis convoyeurs grâce aux deux rampes.

De préférence, le troisième tapis convoyeur comporte une troisième bande transporteuse qui est motorisée. A cet effet, le dispositif d'accumulation comporte un moteur, de préférence fixé à un carter du troisième tapis convoyeur, permettant de mettre en mouvement la troisième bande transporteuse. De préférence, le troisième tapis convoyeur est configuré pour que la vitesse d'avancée de la troisième, bande transporteuse soit synchronisée avec la vitesse d'avancée des première et seconde bandes transporteuses. Un intérêt est de pouvoir réguler précisément la vitesse d'avancée des produits sur la ligne de fabrication.

Par ailleurs, la bande transporteuse s'étend dans un plan, de préférence, sensiblement horizontal.

Selon le dispositif d'accumulation objet de l'invention, la première bande transporteuse est munie d'une première face externe et la seconde bande transporteuse est munie d'une seconde face externe.

En outre, les premier et second systèmes de rampes comprennent un premier et second contre-rouleaux qui sont montés à pivotement selon des axes transversaux aux première et seconde bandes transporteuses et configurés pour prendre appui respectivement contre les première et seconde faces externe, en sorte de rétablir la position normale des première et seconde bandes transporteuses. De même, l'utilisation de contre-rouleaux réduit les frottements de ceux-ci sur les faces externes des bandes transporteuses.

Selon le dispositif d'accumulation objet de l'invention, le premier système de rampes comprend deux premiers flasques positionnés dans le prolongement de la première extrémité du troisième tapis convoyeur à laquelle ils sont assujettis. Ces deux premiers flasques son positionnés avec un écartement entre eux, chacun sur un des côtés latéraux de la première bande transporteuse. En outre, le premier rouléau et le premier contre-rouleau sont montés en liaison pivot selon les axes transversaux, par rapport aux deux premiers flasques.

De même, selon le dispositif d'accumulation objet de l'invention, le second système de rampes comprend deux seconds flasques positionnés dans le prolongement de la seconde extrémité du troisième tapis convoyeur à laquelle ils sont assujettis. Les deux seconds flasques sont positionnés avec un écartement entre eux, chacun sur un des côtés latéraux de la seconde bande transporteuse. En outre, le second rouleau et le second contre-rouleau sont montés en liaison pivot selon les axes transversaux, par rapport aux deux seconds flasques.

Selon le dispositif d'accumulation objet de l'invention, celui-ci comprend une structure porteuse fixe sur laquelle sont montés les premier et second tapis convoyeurs et une structure porteuse mobile sur laquelle sont montés le troisième tapis convoyeur et les premier et second systèmes de rampes. En outre, une liaison glissière est agencée entre la structure porteuse fixe et la structure porteuse mobile pour déplacer le troisième tapis et les deux systèmes de rampes, dans le premier ou le second sens par rapport aux premier et second tapis convoyeurs.

Selon le dispositif d'accumulation objet de l'invention, celui-ci comprend un système de transmission agencé entre la structure porteuse fixe et la structure porteuse mobile et un moteur configuré pour actionner le système de transmission. Ce système de transmission est de préférence du type pignon/crémaillère. On peut toutefois envisager d'autres modes de mise en oeuvre tels qu'une courroie ou une vis sans fin.

L'invention porte également sur une installation comprenant un premier poste de travail, un second poste de travail et un dispositif d'accumulation objet de l'invention, ledit dispositif d'accumulation étant agencé entre le premier poste de travail et le second poste de travail pour acheminer des produits du premier poste de travail vers le second poste de travail.

Selon l'installation objet de l'invention, celle-ci est configurée pour le conditionnement des produits, le premier poste de travail comprenant une fardeleuse configurée pour empaqueter ensemble plusieurs produits et le second poste de travail comprenant un palettiseur configuré pour conditionner sur des palettes les paquets de produits.

De manière préférentielle, l'installation selon l'invention est configurée pour le conditionnement des produits de type bouteilles. On peut toutefois envisager son utilisation pour tout autre type de produit tel que par exemple des biscuits, ou bien des produits pharmaceutiques.

Les caractéristiques de la présente invention apparaîtront à la lecture de la description suivante d'un mode préférentiel de conception s'appuyant sur des figures parmi lesquelles :
- les figures 1 et 2 illustrent une vue de dessus d'une installation comprenant un dispositif d'accumulation agencé entre un premier poste de travail et un second poste de travail, dans une première position d'accumulation minimum et dans une seconde position où l'accumulation est maximum ;
- la figure 3 illustre une vue en perspective du dispositif d'accumulation objet de l'invention ;
- les figures 4 et 5 illustrent une vue de dessus et une vue de face de la structure du support des tapis convoyeurs ;
- la figure 6 illustre une vue de côté mettant en évidence la conception du système de rampes.

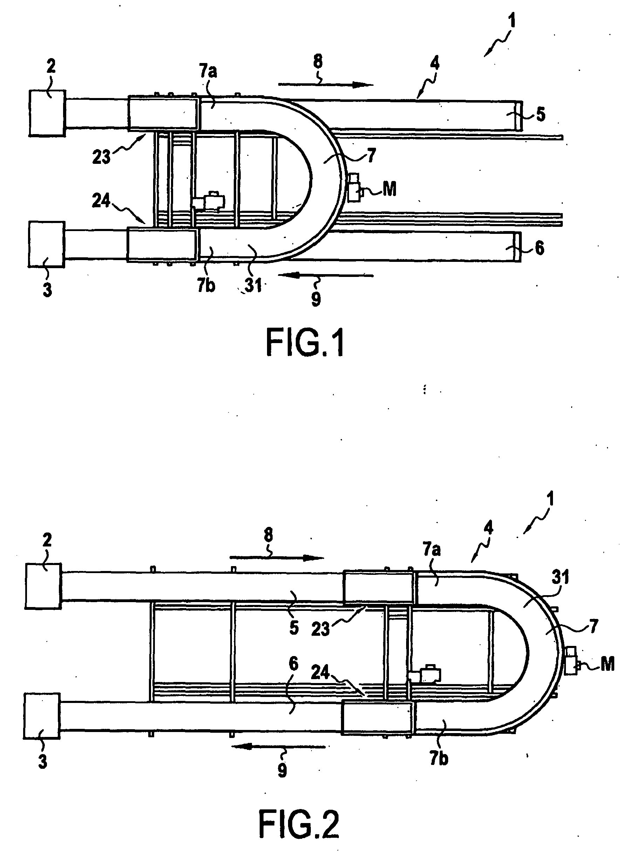

Selon un mode préférentiel de réalisation, l'installation 1 illustrée en figures 1 et 2 est configurée pour le conditionnement de bouteilles de boîtes ou de tout autre produit, celle-ci comprenant un premier poste de travail 2 comprenant une fardeleuse configurée pour empaqueter au moyen d'un film, les bouteillers ensemble, par exemple pour constituer des paquets de quatre, six voire huit bouteilles, le dispositif d'accumulation selon l'invention permettant ensuite d'acheminer les paquets de bouteilles vers un second poste de travail 3 qui, dans ce cas, consiste en un palettiseur permettant le conditionnement des paquets de bouteilles sur des palettes. On peut bien entendu envisager la mise en oeuvre d'autres installations équipées d'un tel dispositif d'accumulation objet de l'invention, pour d'autres applications et d'autres produits ou articles, dès l'instant où il est nécessaire de pouvoir moduler la quantité de produits accumulés entre le premier poste de travail 2 et le second poste de travail 3, en fonction de la cadence de travail desdits postes.

On constate en regard des figures 1 et 2 que le dispositif d'accumulation 4 comprend un premier tapis convoyeur 5, un second tapis convoyeur 6 et un troisième tapis convoyeur 7. Le premier tapis convoyeur 5 et le second tapis convoyeur 6 sont linéaires. Ces tapis convoyeurs 5 et 6 sont de préférence constitués d'une bande transporteuse montée en boucle et tournant sur elle-même au moyen d'un système d'entraînement de type moteur, connu de l'homme du métier. Dans cet exemple non limitatif, les bandes transporteuses comportent une chaîne modulaire à charnières, de préférence en plastique.

Le premier tapis convoyeur 5 permet l'acheminement des produits en sortie du premier poste de travail 2, dans un premier sens défini par la flèche 8 illustrée sur les figures 1 et 2. Inversement, le second tapis convoyeur 6 permet l'acheminement des produits dans un second sens défini par la flèche 9 illustrée sur les figures 1 et 2, en sorte d'acheminer les articles vers le second poste de travail 3. En outre, le troisième tapis convoyeur comprend une forme semi-circulaire telle qu'illustrée sur les figures 1 et 2, ce qui permet de transférer les produits du premier tapis convoyeur 5 vers le second tapis convoyeur 6. On constate par ailleurs que ces premier et second tapis convoyeurs 5 et 6 sont disposés linéairement et sont parallèles entre eux.

Le dispositif d'accumulation selon l'invention comporte en outre un moteur M relié à la bande transporteuse 31 du troisième tapis convoyeur 7 permettant de faire avancer ladite bande transporteuse selon une trajectoire semi-circulaire. Pour ce faire, la bande transporteuse 31 est montée en boucle à l'aide de rouleaux disposés dans le carter du troisième tapis convoyeur.

Par ailleurs, comme on le constate sur les figures 1, 2, 3 et 6, la bande transporteuse 31 du troisième tapis convoyeur 7 s'étend dans un plan horizontal. Plus exactement, on comprend que c'est la face externe de ladite bande transporteuse 31 du troisième tapis convoyeur qui s'étend dans un plan horizontal.

L'avancement de la bande transporteuse du troisième tapis convoyeur permet d'amener les produits à convoyer depuis l'entrée vers la sortie du troisième tapis convoyeur, les produits se déplaçant dans un plan horizontal.

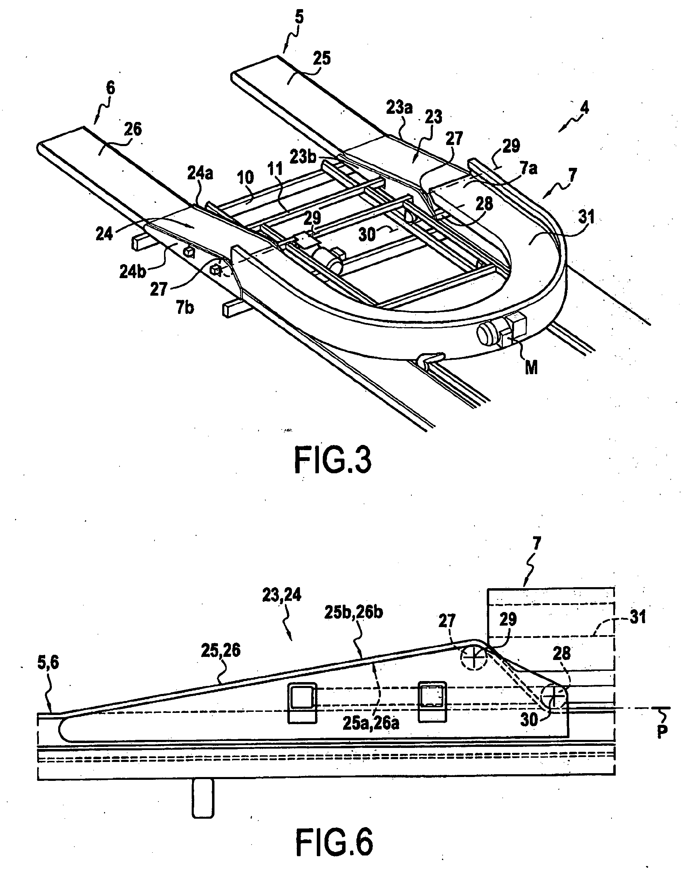

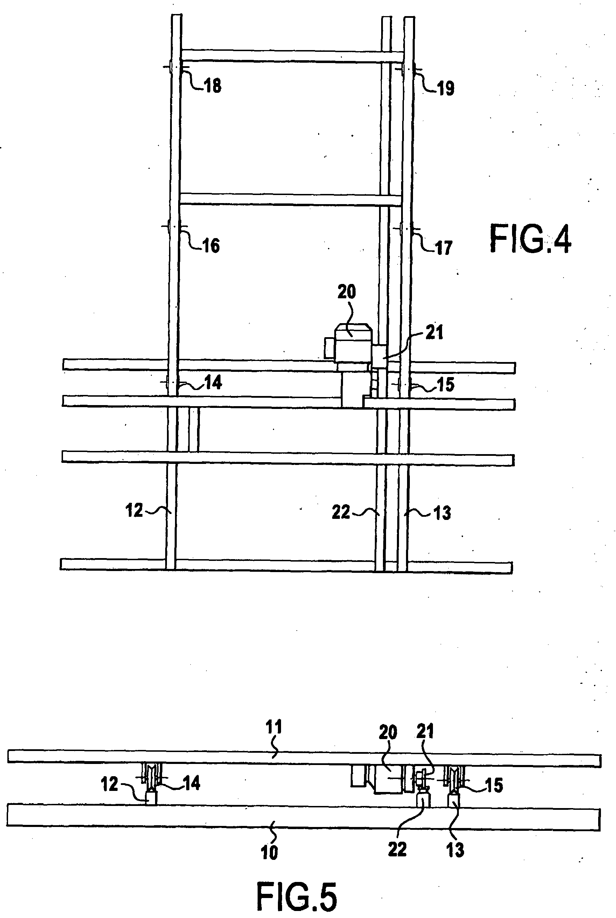

Tel qu'on le constate sur la figure 3, le dispositif d'accumulation 4 comprend une première structure porteuse fixe 10 et une seconde structure porteuse mobile 11 par rapport à la structure porteuse fixe 10. Pour cela, tel qu'on le constate sur les figures 4 et 5, la structure porteuse mobile 11 est montée en liaison glissière par rapport à la structure porteuse fixe 10. La structure porteuse fixe 10 comprend des rails de guidage 12, 13 tandis que la structure porteuse mobile 11 comprend des galets de roulement 14, 15, 16, 17, 18, 19 répartis uniformément sur ladite structure porteuse mobile 11. Cette liaison glissière permet de translater la structure porteuse mobile 11 par rapport à la structure porteuse fixe 10 soit dans le sens de la flèche 8 ou inversement de la flèche 9, en sorte de réduire au maximum la zone d'accumulation de produits ou au contraire d'augmenter au maximum ladite zone d'accumulation, tel qu'on peut le constater respectivement sur les figures 1 et 2.

On constate également la présence d'un moteur 20 qui permet l'entraînement en rotation d'un pignon 21 engrainant avec une crémaillère 22 disposée dans le sens de la longueur parallèlement aux rails 12, 13, tel qu'illustré sur les figures 4 et 5. Le moteur 20 est à double sens de rotation, permettant d'entraîner la rotation du pignon 21 dans un premier sens de rotation ou dans un second sens de rotation et ainsi, de déplacer la structure porteuse mobile 11 dans le sens de la flèche 8 ou inversement dans le sens de la flèche 9. On pourrait bien entendu envisager d'autres systèmes de transmission actionnés au moyen d'un moteur tel que par exemple une vis sans fin ou une courroie de transmission.

On constate au regard de la figure 3 la présence de deux systèmes de rampes 23, 24. Le premier système de rampe 23 est agencé entre le premier tapis convoyeur 5 et le troisième tapis convoyeur 7 et permet de monter des produits du premier tapis convoyeur 5 vers le troisième tapis convoyeur 7 sur lequel s'accumulent les produits. Inversement, le second système de rampes 24 est agencé entre le troisième tapis convoyeur 7 et le second tapis convoyeur 6 et permet la descente des produits du troisième tapis convoyeur 7 vers le second tapis convoyeur 6.

On comprend donc que le plan horizontal dans lequel s'étend la bande transporteuse du troisième tapis convoyeur 31 est situé au-dessus des premier et second tapis convoyeurs. Ce sont donc les premier et second systèmes de rampes qui permettent de faire monter et descendre les produits.

On constate en regard des figures 3 et 6 que les systèmes. de rampes 23, 24 sont mis en oeuvre en réalisant une déformation de la bande transporteuse 25 du premier tapis convoyeur 5 et de la bande transporteuse 26 du second tapis convoyeur 6. On constate que la première et la seconde bandes transporteuses 25, 26 comprennent chacune une face interne 25a, 26a et une face externe 25b, 26b. Les systèmes de rampes 23, 24 comprennent chacun un premier flasque 23a, 24a et un second flasque 23b, 24b tel qu'illustré sur la figure 3. Le flasque interne 23b du premier système de rampe est fixé au flasque interne 24a du second système de rampe afin de rigidifier l'ensemble.

On constate en regard de la figure 6 que ces systèmes de rampe 23, 24, comprennent chacun un premier rouleau 27 lequel prend appui contre la face interne 25a, 26a de la bande transporteuse 25, 26 des premier et second tapis convoyeurs 5, 6, en sorte de constituer une pente telle qu'illustrée sur les figures 3 et 6 permettant de compenser la différence de hauteur entre le premier tapis convoyeur 5 et le troisième tapis convoyeur 7 et de même, entre le second tapis convoyeur 6 et le troisième tapis convoyeur 7.

En outre, ces systèmes de rampes 23, 24, comprennent chacun un contre-rouleau 28, illustré en figure 6, lequel prend appui sur la face externe 25b, 26b de la bande transporteuse 25, 26 du premier et second tapis convoyeurs 5, 6. Ce contre-rouleau 28, qui est de préférence disposé sous le troisième tapis convoyeur, permet de rétablir la position normale de la bande transporteuse 25, 26 dans le plan P desdits premier et second tapis convoyeurs 5, 6. On constate en regard des figures 3 et 6 que le rouleau 27 et le contre-rouleau 28 sont montés à pivotement selon des axes transversaux 29, 30 par rapport aux bandes transporteuses 25, 26 du premier et du second tapis convoyeurs 5, 6.

De plus, le rouleau 27 est disposé entre l'extrémité basse du système de rampe et le contre rouleau 28, le rouleau 27 étant positionné plus haut que le contre rouleau 28. Cette configuration permet de minimiser les efforts de torsion appliqués sur les bandes transporteuses au passage des rouleaux et contre-rouleaux.

Les flasques 23a, 23b sont fixées sur la structure porteuse mobile 11, au niveau de la première extrémité 7a du troisième tapis convoyeur 7, et positionnées de chaque côté latéral de la bande transporteuse 25 du premier tapis convoyeur 5 tel qu'illustré sur la figure 3. De même, les flasques 24a, 24b du second système de rampes 24 sont fixées sur ladite structure porteuse 11, au niveau de la seconde extrémité 7b du troisième tapis convoyeur 7, et positionnées de chaque côté latéral de la bande transporteuse 26 du second tapis convoyeur 6. On comprend donc que ces systèmes de rampes 23, 24 sont assujettis aux deux extrémités 7a, 7b du troisième tapis convoyeur 7. Ainsi, la translation du troisième tapis convoyeur 7 dans le sens de la flèche 8 ou inversement de la flèche 9 permet concomitamment le déplacement des rouleaux 27 est contre-rouleaux 28, assurant un déplacement des pentes sur les bandes transporteuses 25, 26 des premier et second tapis convoyeurs 5, 6.

On constate au regard des figures 3 et 4 que les rouleaux 27 sont positionnés de manière attenante à la bande transporteuse 31, du troisième tapis convoyeur 7 en sorte d'assurer convenablement le transfert dans un mouvement de montée des produits de la bande transporteuse 25 du premier tapis convoyeur 5 sur la bande transporteuse 31 du troisième tapis convoyeur 7, et inversement le transfert dans un mouvement de descente des produits de la bande transporteuse 31 du troisième tapis convoyeur 7 sur la bande transporteuse 26 du second tapis convoyeur 6.

Le contre-rouleau 28 permet de rétablir la position de la bande transporteuse 5, 6 des premier et second rouleaux 5, 6 en évitant un contact de ladite bande avec la bande transporteuse 31 du troisième tapis convoyeur 7, comme on peut le constater sur la figure 6.

D'autres caractéristiques peuvent être envisagées sans sortir du cadre de la présente invention, notamment quant à la conception des tapis convoyeurs 5 et 6, aux postes de travail 2 et 3, à la transmission entre la structure mobile 11 et la structure fixe 10.

## Revendications

1. Dispositif d'accumulation (4) comprenant un premier tapis convoyeur (5) configuré pour transférer des articles dans un premier sens (8), un second tapis convoyeur (6) parallèle au premier tapis convoyeur (5) et configuré pour transférer les articles dans un second sens (9) inversé au premier sens, un troisième tapis convoyeur (7) configuré pour transférer les articles du premier tapis convoyeur (5) vers le second tapis convoyeur (6) et, des moyens de translation (10 , 11) configurés pour déplacer le troisième tapis convoyeur (7) par rapport aux premier et second tapis convoyeurs (5, 6), dans le premier sens (8) ou dans le second sens (9), ledit troisième tapis convoyeur étant décalé vers le haut par rapport aux premier et second tapis convoyeur, ledit dispositif d'accumulation (4) comprenant deux systèmes de rampe (23, 24) assujettis respectivement aux deux extrémités (7a, 7b) du troisième tapis (7), le premier système de rampe (23) étant configuré pour déformer le premier tapis convoyeur (5) et constituer une première pente assurant la montée des articles du premier tapis convoyeur (5) sur le troisième tapis convoyeur (7) et, le second système de rampe (24) étant configuré pour déformer le second tapis convoyeur (6) et constituer une seconde pente assurant la descente des articles du troisième tapis convoyeur (7) sur le second tapis convoyeur (6), le déplacement du troisième tapis convoyeur (7) permettant concomitamment le déplacement des première et seconde pentes formées sur les premier et second tapis convoyeurs (5, 6).

2. Dispositif d'accumulation (4) selon la revendication 1, dans lequel le premier tapis convoyeur (5) comprend une première bande transporteuse (25) qui est munie d'une première face interne (25a), le second tapis convoyeur (6) comprend une seconde bande transporteuse (26) qui est munie d'une seconde face interne (26a), les premier et second systèmes de rampe (23, 24) comprenant respectivement un premier et second rouleaux (27) qui sont montés à pivotement selon des axes transversaux (29) aux première et seconde bandes transporteuses (25, 26) et de manière attenante aux première et seconde extrémités (7a, 7b) du troisième tapis convoyeur (7), lesdits premier et second rouleaux (27) prenant appui respectivement sur les première et seconde faces internes (25a, 26a) pour constituer lesdites première et seconde pentes.

3. Dispositif d'accumulation (4) selon la revendication 2, dans lequel la première bande transporteuse (25) est munie d'une première face externe (25b) et la seconde bande transporteuse (26) est munie d'une seconde face externe (26b), les premier et second systèmes de rampe (23, 24) comprenant respectivement un premier et second contre-rouleaux (28) qui sont montés à pivotement selon des axes transversaux (30) aux première et seconde bandes transporteuses (25, 26) et configurés pour prendre appui respectivement contre les première et seconde faces externes (25b, 26b) et rétablir la position normale des première et seconde bandes transporteuses (25, 26).

4. Dispositif selon la revendication 3, **caractérisé en ce que** les premier et second rouleaux (27) sont situés plus haut que les premier et second contre-rouleaux (28), et **en ce que** les premier et second contre-rouleaux (28) sont situés en dessous du troisième tapis convoyeur (7).

5. Dispositif d'accumulation (4) selon la revendication 3 ou 4, dans lequel le premier système de rampe (23) comprend deux premiers flasques (23a, 23b) positionnés dans le prolongement de la première extrémité (7a) du troisième tapis convoyeur (7) à laquelle ils sont assujettis, les deux premiers flasques (23a, 23b) étant positionnés avec un écartement entre eux, chacun sur un des côtés latéraux de la première bande transporteuse (25), le premier rouleau (27) et le premier contre-rouleau (28) étant monté en liaison pivot selon les axes transversaux (29, 30) par rapport aux deux premiers flasques (23a, 23b).

6. Dispositif d'accumulation (4) selon la revendication 5, dans lequel le second système de rampe (24) comprend deux seconds flasques (24a, 24b) positionnés dans le prolongement de la seconde extrémité (7b) du troisième tapis convoyeur (7) à laquelle ils sont assujettis, les deux seconds flasques (24a, 24b) étant positionnés avec un écartement entre eux, chacun sur un des côtés latéraux de la seconde bande transporteuse (26), le second rouleau (27) et le second contre-rouleau (28) étant monté en liaison pivot selon les axes transversaux (29, 30) par rapport aux deux seconds flasques (24a, 24b).

7. Dispositif d'accumulation (4) selon l'une quelconque des revendications 1 à 6, **caractérisé en ce que** le troisième tapis convoyeur (7) comporte une troisième bande transporteuse (31), et un moteur (M) permettant de faire avancer ladite troisième bande transporteuse (31) selon une trajectoire semi-circulaire.

8. Dispositif d'accumulation (4) selon l'une des revendications 1 à 7, lequel comprend une structure porteuse fixe (10) sur laquelle sont montés les premier et second tapis convoyeurs (5, 6) et une structure porteuse mobile (11) sur laquelle sont montés le troisième tapis convoyeur (7) et les premier et second systèmes de rampe (23, 24), une liaison glissière (12, 13, 14, 15, 16, 17, 18, 19) étant agencée entre la structure porteuse fixe (10) et la structure porteuse mobile (11) pour déplacer le troisième tapis convoyeur (7) dans le premier ou second sens (8, 9) par rapport aux premier et second tapis convoyeur (5, 6).

9. Dispositif d'accumulation (4) selon la revendication 8, lequel comprend un système de transmission (21, 22) agencé entre la structure porteuse fixe (10) et la structure porteuse mobile (11), et un moteur (20) configuré pour actionner le système de transmission.

10. Installation (1) comprenant un premier poste de travail (2), un second poste de travail (3) et un dispositif d'accumulation (4) selon l'une des revendications 1 à 9, ledit dispositif d'accumulation (4) étant agencé entre le premier poste de travail (2) et le second poste de travail (3) pour acheminer des produits dudit premier poste de travail vers ledit second poste de travail.

11. Installation (1) selon la revendication 10, laquelle est configurée pour le conditionnement des produits, le premier poste de travail (2) comprenant une fardeleuse configurée pour empaqueter ensemble plusieurs produits et le second poste de travail (3) comprenant un palettiseur configuré pour conditionner sur des palettes, les paquets de produits.

12. Installation (1) selon la revendication 11, dans laquelle les produits sont des bouteilles.

## Patentansprüche

1. Sammelvorrichtung (4), umfassend ein erstes Förderband (5), das dazu ausgestaltet ist, Gegenstände in eine erste Richtung (8) zu transportieren, ein zu dem ersten Förderband (5) paralleles zweites Förderband (6), das dazu ausgestaltet, die Gegenstände in eine zu der ersten Richtung umgekehrte zweite Richtung (9) zu transportieren, ein drittes Förderband (7), das dazu ausgestaltet ist, die Gegenstände von dem ersten Förderband (5) zu dem zweiten Förderband (6) zu transportieren, und Verschiebungsmittel (10, 11), die dazu ausgestaltet sind, das dritte Förderband (7) gegenüber dem ersten und dem zweiten Förderband (5, 6) in die erste Richtung (8) oder in die zweite Richtung (9) zu bewegen, wobei das dritte Förderband gegenüber dem ersten und dem zweiten Förderband nach oben versetzt ist, wobei die Sammelvorrichtung (4) zwei Rampensysteme (23, 24) umfasst, die jeweils an den beiden Enden (7a, 7b) des dritten Bandes (7) befestigt sind, wobei das erste Rampensystem (23) dazu ausgestaltet ist, das erste Förderband (5) zu verformen und eine erste Schräge auszubilden, die sicherstellt, dass die Gegenstände von dem ersten Förderband (5) auf das dritte Förderband (7) hinauf bewegt werden, und wobei das zweite Rampensystem (24) dazu ausgestaltet ist, das zweite Förderband (6) zu verformen und eine zweite Schräge auszubilden, die sicherstellt, dass die Gegenstände von dem dritten Förderband (7) auf das zweite Förderband (6) hinunter bewegt werden, wobei die Verlagerung des dritten Förderbandes (7) gleichzeitig die Verlagerung der ersten und der zweiten Schrägen ermöglicht, die an dem ersten und dem zweiten Förderband (5, 6) ausgebildet sind.

2. Sammelvorrichtung (4) nach Anspruch 1, wobei das erste Förderband (5) ein erstes Transportband (25) umfasst, das mit einer ersten Innenseite (25a) versehen ist, wobei das zweite Förderband (6) ein zweites Transportband (26) umfasst, das mit einer zweiten Innenseite (26a) versehen ist, wobei das erste und das zweite Rampensystem (23, 24) eine erste bzw. eine zweite Rolle (27) umfassen, die um Achsen (29), welche zu dem ersten und dem zweiten Transportband (25, 26) quer verlaufen, drehbar und an das erste und das zweite Ende (7a, 7b) des dritten Förderbandes (7) angrenzend angebracht sind, wobei sich die erste und die zweite Rolle (27) an der ersten bzw. der zweiten Innenseite (25a, 26a) abstützen, um die erste und die zweite Schräge auszubilden.

3. Sammelvorrichtung (4) nach Anspruch 2, wobei das erste Transportband (25) mit einer ersten Außenseite (25b) versehen ist und das zweite Transportband (26) mit einer zweiten Außenseite (26b) versehen ist, wobei das erste und das zweite Rampensystem (23, 24) eine erste bzw. eine zweite Gegenrolle (28) umfassen, die um Achsen (30), welche zu dem ersten und dem zweiten Transportband (25, 26) quer verlaufen, drehbar angebracht und dazu ausgestaltet sind, sich an der ersten bzw. der zweiten Außenseite (25b, 26b) abzustützen und die normale Position des ersten und des zweiten Transportbandes (25, 26) wiederherzustellen.

4. Vorrichtung nach Anspruch 3, **dadurch gekennzeichnet, dass** die erste und die zweite Rolle (27) höher liegen als die erste und die zweite Gegenrolle (28) und dass die erste und die zweite Gegenrolle (28) unter dem dritten Förderband (7) gelegen sind.

5. Sammelvorrichtung (4) nach Anspruch 3 oder 4, wobei das erste Rampensystem (23) zwei erste Flansche (23a, 23b) umfasst, die in der Verlängerung des ersten Endes (7a) des dritten Förderbandes (7), an dem sie befestigt sind, angeordnet sind, wobei die beiden ersten Flansche (23a, 23b) mit einem Abstand untereinander, jeweils an einer der Seitenflächen des ersten Transportbandes (25) positioniert sind, wobei die erste Rolle (27) und die erste Gegenrolle (28) um die Querachsen (29, 30) drehbar gegenüber den beiden ersten Flanschen (23a, 23b) angebracht sind.

6. Sammelvorrichtung (4) nach Anspruch 5, wobei das zweite Rampensystem (24) zwei zweite Flansche (24a, 24b) umfasst, die in der Verlängerung des zweiten Endes (7b) des dritten Förderbandes (7), an dem sie befestigt sind, positioniert sind, wobei die beiden zweiten Flansche (24a, 24b) mit einem Abstand untereinander, jeweils an einer der Seitenflächen des zweiten Transportbandes (26) angeordnet sind, wobei die zweite Rolle (27) und die zweite Gegenrolle (28) um die Querachsen (29, 30) drehbar gegenüber den beiden zweiten Flanschen (24a, 24b) angebracht sind.

7. Sammelvorrichtung (4) nach einem der Ansprüche 1 bis 6, **dadurch gekennzeichnet, dass** das dritte Förderband (7) ein drittes Transportband (31) und einen Motor (M) umfasst, der ermöglicht, das dritte Transportband (31) entlang einer halbkreisförmigen Bahn vorwärts zu bewegen.

8. Sammelvorrichtung (4) nach einem der Ansprüche 1 bis 7, welche eine feststehende Tragstruktur (10), an welcher das erste und das zweite Förderband (5, 6) angebracht sind, und eine bewegliche Tragstruktur (11), an welcher das dritte Förderband (7) und das erste und das zweite Rampensystem (23, 24) angebracht sind, umfasst, wobei eine Gleitverbindung (12, 13, 14, 15, 16, 17, 18, 19) zwischen der feststehenden Tragstruktur (10) und der beweglichen Tragstruktur (11) angeordnet ist, um das dritte Förderband (7) gegenüber dem ersten und dem zweiten Förderband (5, 6) in die erste oder die zweite Richtung (8, 9) zu bewegen.

9. Sammelvorrichtung (4) nach Anspruch 8, welche ein Übertragungssystem (21, 22), das zwischen der feststehenden Tragstruktur (10) und der beweglichen Tragstruktur (11) angeordnet ist, und einen Motor (20), der dazu ausgestaltet ist, das Übertragungssystem zu betätigen, umfasst.

10. Anlage (1), umfassend eine erste Arbeitsstation (2), eine zweite Arbeitsstation (3) und eine Sammelvorrichtung (4) nach einem der Ansprüche 1 bis 9, wobei die Sammelvorrichtung (4) zwischen der ersten Arbeitsstation (2) und der zweiten Arbeitsstation (3) angeordnet ist, um Produkte von der ersten Arbeitsstation zu der zweiten Arbeitsstation zu befördern.

11. Anlage (1) nach Anspruch 10, die zum Verpacken der Produkte ausgestaltet ist, wobei die erste Arbeitsstation (2) eine Schrumpffolienverpackungsmaschine umfasst, die zum Zusammenpacken von mehreren Produkten ausgestaltet ist, und wobei die zweite Arbeitsstation (3) einen Palettierer umfasst, der dazu ausgestaltet ist, die Produktpakete auf Paletten abzupacken.

12. Anlage (1) nach Anspruch 11, wobei die Produkte Flaschen sind.

## Claims

1. An accumulation device (4) comprising a first conveyor belt (5) configured to transfer items in a first direction (8), a second conveyor belt (6) parallel to the first conveyor belt (5) and configured to transfer the items in a second direction (9) inverse to the first direction, a third conveyor belt (7) configured to transfer the items from the first conveyor belt (5) to the second conveyor belt (6) and translation means (10 , 11) configured to move the third conveyor belt (7) relative to the first and second conveyor belts (5, 6), in the first direction (8) or in the second direction (9), said third conveyor belt being offset upwards relative to the first and second conveyor belt, said accumulation device (4) comprising two ramp systems (23, 24) attached respectively at the two ends (7a, 7b) of the third conveyor belt (7), the first ramp system (23) being configured to deform the first conveyor belt (5) and constitute a first slope ensuring that items rise from the first conveyor belt (5) on the third conveyor belt (7) and, the second ramp system (24) being configured to deform the second conveyor belt (6) and constitute a second slope ensuring that items descend from the third conveyor belt (7) on the second conveyor belt (6), the displacement of the third conveyor belt (7) at the same time enabling displacement of the first and second slopes formed on the first and second conveyor belts (5, 6).

2. The accumulation device (4) according to Claim 1, in which the first conveyor belt (5) comprises a first conveyor belt (25) which is fitted with a first internal face (25a), the second conveyor belt (6) comprises a second conveyor belt (26) which is fitted with a second internal face (26a), the first and second ramp systems (23, 24) comprising respectively a first and second roller (27) which are mounted pivotingly along axes (29) transversal to the first and second conveyor belts (25, 26) and adjoining the first and second ends (7a, 7b) of the third conveyor belt (7), said first and second rollers (27) supported respectively on the first and second internal faces (25a, 26a) to constitute said first and second slopes.

3. The accumulation device (4) according to Claim 2, in which the first conveyor belt (25) is fitted with a first external face (25b) and the second conveyor belt (26) is fitted with a second external face (26b), the first and second ramp systems (23, 24) comprising respectively a first and second counter-rollers (28) which are mounted pivotingly along the axes (30) transversal to the first and second conveyor belts (25, 26) and configured to be supported respectively against the first and second external faces (25b, 26b) and restore the normal position of the first and second conveyor belts (25, 26).

4. The device according to Claim 3, **characterised in that** the first and second rollers (27) are located higher than the first and second counter-rollers (28), and **in that** the first and second counter-rollers (28) are located below the third conveyor belt (7).

5. The accumulation device (4) according to Claim 3 or 4, in which the first ramp system (23) comprises two first flanges (23a, 23b) positioned in the extension of the first end (7a) of the third conveyor belt (7) to which they are attached, the two first flanges (23a, 23b) being positioned with a distance between them, each on one of the lateral sides of the first conveyor belt (25), the first roller (27) and the first counter-roller (28) being mounted in a pivot link along the transversal axes (29, 30) relative to the two first flanges (23a, 23b).

6. The accumulation device (4) according to Claim 5, in which the second ramp system (24) comprises two second flanges (24a, 24b) positioned in the extension of the second end (7b) of the third conveyor belt (7) to which they are attached, the two second flanges (24a, 24b) being positioned with a distance between them, each on one of the lateral sides of the second conveyor belt (26), the second roller (27) and the second counter-roller (28) being mounted in a pivot link along the transversal axes (29, 30) relative to the two second flanges (24a, 24b).

7. The accumulation device (4) according to any one of Claims 1 to 6, **characterised in that** the third conveyor belt (7) comprises a third conveyor belt (31) and a motor (M) for advancing said third conveyor belt (31) according to a semicircular trajectory.

8. The accumulation device (4) according to any one of Claims 1 to 7, which comprises a fixed support structure (10) on which the first and second conveyor belts (5, 6) are mounted and a mobile support structure (11) on which are mounted the third conveyor belt (7) and the first and second ramp systems (23, 24), a slide link (12, 13, 14, 15, 16, 17, 18, 19) being arranged between the fixed support structure (10) and the mobile support structure (11) for moving the third conveyor belt (7) in the first or second direction (8, 9) relative to the first and second conveyor belt (5, 6).

9. The accumulation device (4) according to Claim 8, which comprises a transmission system (21, 22) arranged between the fixed support structure (10) and the mobile support structure (11) and a motor (20) configured to actuate the transmission system.

10. An installation (1) comprising a first workstation (2), a second workstation (3) and an accumulation device (4) according to any one of Claims 1 to 9, said accumulation device (4) being arranged between the first workstation (2) and the second workstation (3) to convey products from said first workstation to said second workstation.

11. The installation (1) according to Claim 10, which is configured for packaging products, the first workstation (2) comprising a shrinkwrapper configured for bundling together several products, and the second workstation (3) comprising a palletiser configured for stacking the packets of products onto pallets.

12. The installation (1) according to Claim 11, in which the products are bottles.
